# FASCICULE DE BREVET EUROPEEN

(11) **EP 0 986 463 B1**
(45) Date de publication et mention de la délivrance du brevet: **04.02.2004**
(21) Numéro de dépôt: 98928360.1
(22) Date de dépôt: 26.05.1998
(51) Int. Cl.: B32B 27/06, B32B 27/12, B32B 31/00, B29C 43/18, B29C 44/14

(54) **Complexe en feuille utilisable pour réaliser le revêtement de surface de structures moulées**
Mehrschichtige Folie für die Oberflächenbeschichtung von Formkörpern
Sheet complex useful for surface coating of moulded structures

(30) Priorité: 30.05.1997 FR 9706913
(43) Date de publication de la demande: 22.03.2000
(73) Titulaire: TEXTILES ET PLASTIQUES CHOMARAT, 07160 Le Cheylard (FR)
(72) Inventeur: BACCUS, Gérard, F-07160 Accons (FR); SANIAL, Philippe, F-07160 Le Cheylard (FR); CLEDAT, Bruno, F-07160 Le Cheylard (FR)
(74) Mandataire: Vuillermoz, Bruno
(86) Numéro de dépôt international: PCT/FR1998/001051
(87) Numéro de publication internationale: WO 1998/053990

(56) Documents cités:
- EP-A- 0 583 504
- FR-A- 2 700 497
- GB-A- 1 323 493
- US-A- 5 061 572
- US-A- 5 298 319

## Description

### Domaine technique

La présente invention a trait à un nouveau type de complexe en feuille utilisable pour réaliser le revêtement de surface de structures moulées, planes ou en forme, obtenu plus particulièrement par la technique de moulage dite « par injection basse pression ou séquentielle », le terme « injection » étant utilisé dans la suite de la description pour désigner une telle technique.

### Techniques antérieures

Dans de nombreux secteurs techniques, notamment dans le secteur de l'automobile, on utilise de plus en plus des structures moulées par injection d'une matière thermoplastique, polyoléfine notamment, par exemple pour réaliser les tableaux de bord, les assises ou dossiers de sièges, et les revêtements de portières.

Les complexes utilisés pour réaliser le revêtement de surface du noyau moulé, noyau qui peut être soit dense, soit constitué d'une mousse synthétique, peuvent être de différents types.

Ils peuvent, par exemple, être constitués par une simple feuille de matière thermoplastique (polyoléfine) dont la surface externe a reçu un traitement destiné à lui conférer un aspect, par exemple imitant le cuir, notamment un traitement de grainage.

Outre ces feuilles thermoplastiques, il a été également envisagé d'utiliser une structure textile simple, tissu ou tricot notamment.

En général, ces complexes ou feuilles sont rapportés à la surface de la structure moulée, qui constitue donc un noyau, après réalisation par moulage de cette dernière, l'association étant en général réalisée par collage ou tout autre moyen équivalent comme cela ressort notamment de l'EP-A-0 583 504 et FR-A-2 700 497.

Il a également été proposé, comme cela ressort du FR-A 2 203 273, notamment pour réaliser des garnitures de sièges, d'utiliser un complexe en feuille comprenant une étoffe extensible associée par sa face interne à une couche de polymère thermoplastique thermoformable, cellulaire, telle que notamment une couche de PVC expansée.

Lors de l'opération de moulage, opération qui dans le cas de ce document, est réalisée selon la technique dite « par injection sous vide », le revêtement destiné à constituer la surface de l'article moulé est associé au noyau lors du moulage de ce dernier, en disposant ledit revêtement à l'intérieur du moule puis en faisant le vide et en injectant alors dans ledit moule une composition de matière thermoplastique réticulable, éventuellement moussante, et enfin, lorsque ladite réticulation de la composition est terminée, en éliminant le vide et en démoulant la structure associée à son revêtement final.

Les principaux problèmes qui se posent lors de la réalisation d'une telle structure réalisée par injection sous vide, est d'une part celui de l'adhérence entre le matériau formant le revêtement de surface et le noyau injecté et, d'autre part, le fait qu'il ne faut pas, lors de cette opération, altérer les caractéristiques du revêtement de surface par la chaleur et/ou la nature du polymère utilisé pour former le noyau, notamment lorsque l'opération de moulage est réalisée par la technique « injection basse pression », qui implique l'utilisation d'une température élevée pouvant atteindre 220°C, voire même plus.

### Exposé de l'invention

Or on a trouvé, et c'est ce qui fait l'objet de la présente invention, un nouveau type de matériau complexe en feuille qui peut être utilisé pour la réalisation d'articles moulés, notamment par la technique d'injection par basse pression, qui permet de résoudre l'ensemble des problèmes que pose la réalisation de tels articles, à savoir adhérence avec le noyau injecté, protection thermique du complexe externe lors de la phase d'injection, non détérioration des caractéristiques (par exemple le toucher ou l'aspect) de la couche de surface.

D'une manière générale, le complexe en feuille conforme à l'invention utilisable pour réaliser le revêtement de surface de structures moulées, notamment par la technique d'injection basse pression de matière thermoplastique, se compose d'une structure plane destinée à constituer la « peau » de l'élément final, associée à une sous-couche destinée à adhérer avec la matière injectée, et il se caractérise en ce que ladite sous-couche est constituée par une nappe textile à base de fibres résistant à une température supérieure à la température d'injection, la liaison avec la face envers de la structure plane étant obtenue par l'intermédiaire d'un film à base d'une composition thermoplastique, compatible avec les deux constituants du complexe, et ladite nappe textile formant une barrière thermique lors de la phase d'injection et couche d'adhérence avec la matière injectée.

Comme matériau constituant la couche de surface, on peut utiliser aussi bien un matériau en feuille extrudée à base d'une matière thermoplastique (polyéthylène par exemple), dont l'une des faces a reçu un traitement (grainage par exemple) lui donnant son aspect final, qu'une feuille à base de matière thermoplastique associée à une couche de mousse, qu'une structure textile simple ou associée à une couche de mousse.

La structure textile d'envers associée à la couche de surface peut être constituée d'une nappe non tissée ou d'un tricot, jersey plus particulièrement. Il peut également être envisagé d'utiliser un tissu.

Lorsque la structure d'envers est un non tissé, il peut être à base de fibres de polyester, polypropylène ou d'un mélange polyester/fibres cellulosiques, polypropylène/fibres cellulosiques.

Ce non tissé peut être soit un non tissé aiguilleté, soit un non tissé à base de filaments continus obtenus par filage extrusion. Lorsque l'on utilise un non tissé obtenu par filage d'extrusion, les capacités d'allongement sont plus limitées, mais en revanche, on obtient un complexe moins épais et plus régulier.

Le poids du non tissé peut être compris entre 50 et 500 g/m2, mais sera de préférence de l'ordre de 50 à 300 g/m2.

Lorsque le textile d'envers est constitué par un tricot jersey, ce dernier peut également être à base de fibres de polyester, polyamide ou polypropylène.

Son poids au mètre carré peut varier de 30 à 200 g/m2 et est de préférence compris entre 60 et 150 g/m2.

Par rapport à un non tissé, l'utilisation d'un jersey d'envers permet d'obtenir une capacité d'allongement plus élevée ainsi qu'une très bonne régularité.

Dans les deux cas, la nature de la matière textile entrant dans la composition de structures d'envers sera fonction des températures nécessaires à l'injection du noyau. On utilisera le polyester si le procédé d'injection nécessite de travailler à des températures supérieures à 220°C. Il est avantageux d'utiliser des fibres cellulosiques, soit seules soit en mélange, car de telles fibres naturelles ne fondent pas et constituent une bonne isolation thermique.

La liaison entre la couche de surface et la sous-couche est obtenue par l'intermédiaire d'un film thermoplastique, et ce directement lors de l'extrusion dudit film.

Avantageusement, on utilisera un film à base de polyoléfine tel que polyéthylène, polypropylène, éthylène vinyle acétate, ou un mélange de ces constituants présentant un indice de fusion élevé, ce qui permet d'avoir un très bon accrochage entre le support textile et le revêtement externe. Dans un tel cas, la densité de la feuille de liaison est avantageusement comprise entre 0,85 et 0,95. Par ailleurs, son épaisseur sera fonction des éléments à associer, mais d'une manière générale, une épaisseur du film de liaison de 50 à 200 microns convient pour la plupart des applications.

Lorsque la structure externe est constituée par un textile (tricot, tissu) associé à une couche de mousse, cette couche de mousse aura de préférence une mousse à base d'un polymère thermoplastique sélectionné dans la famille des polyoléfines.

L'association structure textile/couche de mousse sera réalisée d'une manière similaire à l'association avec le revêtement textile d'envers.

Un procédé permettant de réaliser un tel complexe se caractérise en ce que l'association structure de surface/nappe textile d'envers, est réalisée immédiatement en aval d'une filière d'extrusion d'un film de polyoléfine, alors que ce dernier est encore à température élevée, l'association étant obtenue par pression au moyen d'une calandre. Lors de l'extrusion, le film doit être extrudé à une température supérieure à 200°C, de préférence de 230 à 240°C afin d'obtenir une bonne fluidité de la matière, donc un bon accrochage entre le textile d'envers et la couche de surface. Eventuellement, ces deux éléments peuvent être réchauffés avant association.

### Brève description des dessins

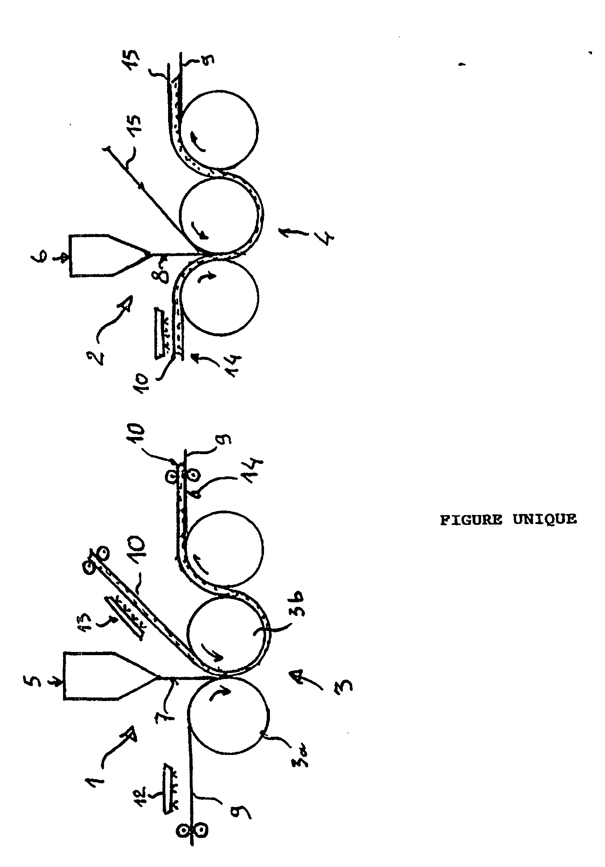

L'invention et les avantages qu'elle apporte seront cependant mieux comprise grâce aux exemples de produits réalisés conformément à l'invention, exemples qui suivent donnés à titre indicatif mais non limitatif, de tels produits étant obtenus sur une ligne de production telle que schématisée à la figure unique annexée.

### Manière de réaliser l'invention

En se reportant à cette figure, les complexes en feuille conformes à l'invention et qui sont utilisables pour réaliser le revêtement de surface de structures moulées, notamment par la technique d'injection sous vide de matière thermoplastique, sont obtenus sur une ligne de production permettant de réaliser en continu des matériaux complexes en feuille comprenant un support dont au moins une face est associée à un revêtement, la liaison ou complexage des constituants étant réalisée par pressage au moyen d'une calandre, des moyens de préchauffage de la matière pouvant être prévus en amont de la ou des zones de complexage.

D'une manière générale, pour réaliser la totalité de la gamme de complexes conformes à l'invention, une telle installation se compose essentiellement de deux ensembles de complexage désignés respectivement par les références générales (1) et (2), ensembles disposés en série. Chaque ensemble de complexage comprend une calandre (3,4) associée à une extrudeuse (5,6) permettant de délivrer un film (7,8) de matière thermoplastique entre deux rouleaux desdites calandres. Dans la forme de réalisation illustrée, les calandres (3,4) sont des calandres à trois cylindres, l'écartement entre deux cylindres consécutifs pouvant être réglé en fonction de l'épaisseur du complexe à réaliser et de la pression que l'on souhaite exercer lors du complexage.

Le cylindre intermédiaire de chaque calandre est un cylindre en acier qui peut être lisse ou grainé alors que les cylindres extrêmes peuvent être soit en acier soit revêtus d'une couche de caoutchouc.

Les extrudeuses (5,6) sont des extrudeuses conventionnelles, qui peuvent être conçues pour produire soit des films monocouche soit des films multicouches.

A ces ensembles de complexage (1,2), sont associés des ensembles d'alimentation (non représentés) permettant de délivrer des structures en feuille (9,10,15) préalablement réalisées, par exemple des feuilles de mousse, de matière plastique ou des structures textiles, tels que tissus, tricots, non tissés.

Enfin, des moyens de préchauffage (12,13) constitués par exemple par des rampes à infrarouge permettent éventuellement de préchauffer les matières à assembler.

Sur une telle installation, on réalise les complexes conformes à l'invention qui suivent.

### Exemple 1

On réalise un complexe conforme à l'invention constitué d'un revêtement de surface à base d'une structure textile (9) revêtue sur sa face envers d'une seconde structure textile (10) formant barrière thermique lors de la phase d'injection. Pour ce faire, seul le premier ensemble de complexage (1) de la ligne de production illustré par le schéma annexé est utilisé.

La structure textile de surface (9) est constituée par un tricot velours Jacquard réalisé sur un métier circulaire à partir de fils de polyester texturé selon la technique dite par fausse torsion fixée, ces fils ayant un titre de 167 dtex et comportant chacun 32 brins. Un tel tricot pèse310 g/m2.

La nappe textile (10) destinée à former la barrière lors de l'opération d'injection sous vide est, quant à elle, constituée par un non tissé aiguilleté pesant 120 g/m2, obtenu à partir de fibres de polyester. Ces deux éléments sont complexés entre les cylindres (3a,3b) de la calandre (3) en étant amenés de part et d'autre d'un film (7) produit par l'extrudeuse (5), film à base de polyéthylène, la température d'extrusion étant de 220°C. Avantageusement, les deux structures (9,10) sont préchauffées au moyen de rampes à infrarouge (12,13).

Après complexage, on obtient une structure (14) qui est renvidée, qui pèse 430 g/m2 et a une épaisseur totale d'environ un millimètre.

Une telle structure est particulièrement adaptée pour réaliser la peau d'articles moulés par injection basse pression, par exemple de pièces à base de polyéthylène pour lesquels le moulage est réalisé à une température de 220°C.

### Exemple 2

On répète l'exemple 1, si ce n'est que la sous-couche textile (10) est constituée par une nappe pesant 60 g/m2, elle même formée de deux nappes élémentaires non tissées, l'une obtenue par extrusion/filage de filaments de polyester, l'autre par un non tissé cellulosique.

La liaison de cette nappe (10) avec la structure textile de surface (9) est obtenue à partir d'un film de polyéthylène (7) extrudé en (5) à une température de 220°C.

L'article obtenu est également parfaitement adapté pour réaliser la peau d'articles moulés. Par ailleurs, par rapport à l'article précédent, on obtient une structure moins épaisse, présentant une capacité d'allongement inférieure, un tel article étant particulièrement adapté pour réaliser des pièces peu déformées, tels que par exemples des panneaux de portes de véhicules.

### Exemple 3

On réalise un complexe conforme à l'invention comportant d'une part, une couche de surface (9) constituée par une feuille de matière thermoplastique préalablement réalisée, feuille à base d'un mélange d'élastomère thermoplastique et de polyoléfine, et qui a une épaisseur de 0,5 mm, cette feuille étant associée à une couche de mousse qui est recouverte sur sa face inférieure d'une barrière textile réalisée conformément à l'invention.

Un tel complexe est obtenu en utilisant les deux ensembles de complexage (1,2) de l'installation de production illustrée sur le schéma annexé.

Sur le premier ensemble de complexage (1), on réalise l'association de la feuille (9) préalablement réalisée avec une sous-couche (10) en mousse de polypropylène ayant une épaisseur de 3 mm et une densité de 67 kg/m3 Cette association est obtenue par complexage au moyen d'un film de polyéthylène (7) extrudé entre les deux rouleaux (3a,3b) de la calandre (3). Les deux éléments (9,10)du complexe sont avantageusement préchauffés en (12) et (13).

Le complexe (14) constitué donc d'une face d'aspect (9) formée par la feuille de matière thermoplastique (9) et de la sous-couche en mousse (10), est ensuite amené au deuxième ensemble de complexage (2).

On réalise alors l'association de la face envers de la couche de mousse (10) avec une barrière textile (15) constituée par un tricot jersey à base de fils de polyester ayant un titre de 167 dtex, ce tricot pesant 60 g/m2.

L'association de ce tricot jersey (15) avec le complexe (14), est obtenue en extrudant un film de polyéthylène (8) au niveau de la zone de jonction entre les deux éléments. Ce film de polyéthylène peut être soit un film monocouche soit un film bicouches, dont la formulation a été adaptée pour obtenir une très bonne adhérence entre le tricot polyester et la sous-couche mousse.

### Exemple 4

On répète l'exemple précédent, si ce n'est que l'on rapporte sur la face envers de la couche de mousse (10) un non tissé similaire à celui de l'exemple 2, c'est-à-dire constitué de deux nappes élémentaires, l'une obtenue par extrusion/filage de filaments de polyester et l'autre par un non tissé cellulosique.

La liaison entre la face envers de la couche de mousse (10) du complexe (14) est obtenue au moyen d'un film (8) bicouches, extrudé à une température de 220°C. La couche du film en regard de la sous-couche comporte des groupes polaires (hydroxyl, acide carboxylique, anydrine maléique ou epoxy) permettant d'améliorer l'adhérence.

### Exemple 5

On réalise un complexe conforme à l'invention comportant une couche de surface (9) constituée par un tissu chaîne et trame pesant 260 g/m2, à base de fils polyester ayant un titre de 167 dtex et comportant chacun 30 brins, fils texturés selon la technique dite par fausse torsion fixée, ledit tissu comportant 32 fils en chaîne et 21 fils en trame. Ce tissu est associé à une sous-couche de mousse (10) en polyéthylène ayant une épaisseur de 3 mm.

L'association est réalisée sur la première calandre (3) comme dans les exemples précédents.

Après réalisation de ce complexe intermédiaire (14), on rapporte sur la face envers la barrière thermique (15) constituée par un non tissé formé de fibres de polyester et qui pèse 150 g/m2.

L'association est obtenue au moyen d'un film (8) extrudé à une température de 220°C à base de polyéthylène.

Tous les articles exemplifiés précédemment sont utilisables pour réaliser les revêtements de surface de structures moulées par injection basse pression. Il a été constaté qu'après injection, il y avait une parfaite adhérence du revêtement sur le noyau moulé et que, par ailleurs, l'aspect, le toucher et les caractéristiques de la face externe n'étaient pas altérées lors de la phase d'injection.

## Revendications

1. Utilisation d'un complexe en feuille pour réaliser le revêtement de surface de structures moulées, notamment par la technique d'injection basse pression de matière thermoplastique, comportant une structure plane (9) destinée à constituer la peau de l'élément final, associée à une sous-couche destinée à adhérer avec la matière injectée, **caractérisée en ce que** ladite sous-couche est constituée par une nappe textile (10) ou (15) à base de fibres résistant à une température supérieure à la température d'injection, la liaison avec la face envers de la structure plane étant obtenue par l'intermédiaire d'un film à base d'une composition thermoplastique, compatible avec les deux constituants du complexe et ladite nappe textile formant une barrière thermique lors de la phase d'injection et couche d'adhérence avec la matière injectée.

2. Utilisation selon la revendication 1, **caractérisée en ce que** la couche de surface (9) du complexe est constituée par un matériau en feuille extrudée à base d'une matière thermoplastique ayant reçu un traitement (grainage) lui donnant son aspect final.

3. Utilisation selon la revendication 1, **caractérisée en ce que** la couche de surface (9) du complexe est constituée par une feuille à base de matière thermoplastique associée à une couche de mousse.

4. Utilisation selon la revendication 1, **caractérisée en ce que** la couche de surface (9) du complexe est constituée par une structure textile (tissu, tricot) associée ou non à une couche de mousse.

5. Utilisation selon les revendications 1 à 4, **caractérisée en ce que** la structure textile d'envers (10) ou (15) du complexe est constituée par une nappe non tissée à base de fibres aiguilletées ou à base de filaments continus obtenus par extrusion/filage, par un tricot voire un tissu.

6. Utilisation selon la revendication 5, **caractérisée en ce que** lorsque la structure d'envers du complexe est un non tissé, il est à base de fibres polyester, polypropylène ou d'un mélange polyester/fibres cellulosiques, polypropylène/fibres cellulosiques, ayant un poids compris entre 50 et 300 g/m2.

7. Utilisation selon la revendication 5, **caractérisée en ce que** lorsque la structure d'envers du complexe est constitué par un tricot, ce dernier est à base de fibres polyester, polyamide, polypropylène, fibres cellulosiques, dont le poids est avantageusement compris entre 30 à 200 g/m2.

8. Utilisation selon l'une des revendications 1 à 7, **caractérisée en ce que** la liaison entre la couche de surface et la sous-couche textile du complexe est réalisée par l'intermédiaire d'un film thermoplastique directement lors de l'extrusion dudit film, ce film étant à base de polyoléfine telle que le polyéthylène, le polypropylène ou un copolymère éthylène vinyle acétate ou un mélange de ces constituants, et présentant un indice de fusion élevé, sa densité étant comprise entre 0,85 et 0,95 et son épaisseur entre 50 et 200 microns.

## Claims

1. Use of a complex in sheet form for producing the surface coating of moulded structures, especially by the technique of low-pressure injection moulding of thermoplastics, comprising a plane structure (9) intended to constitute the skin of the final element, said skin being joined to an underlayer intended to adhere to the injection-moulded material, **characterized in that** the said underlayer is formed by a textile web (10) or (15) based on fibres resistant to a temperature above the injection temperature, the bonding to the reverse side of the plane structure being obtained by means of a film based on a thermoplastic composition, compatible with the two constituents of the complex, and the said textile web forming a thermal barrier during the injection-moulding phase and layer for adhesion to the injection-moulded material.

2. Use according to Claim 1, **characterized in that** the surface layer (9) of the complex is formed by an extruded sheet material based on a thermoplastic that has received a treatment (embossing) giving it its final appearance.

3. Use according to Claim 1, **characterized in that** the surface layer (9) of the complex is formed by a thermoplastic-based sheet joined to a foam layer.

4. Use according to Claim 1, **characterized in that** the surface layer (9) of the complex is formed by a textile structure (a woven or knit) which may or may not be joined to a foam layer.

5. Use according to Claims 1 to 4, **characterized in that** the back textile structure (10) or (15) of the complex is formed by a nonwoven web based on needle-punched fibres or based on continuous filaments obtained by extrusion/spinning by a knit or even a woven.

6. Use according to Claim 5, **characterized in that** when the back structure of the complex is a nonwoven, it is based on polyester or polypropylene fibres or on a mixture of polyester [lacuna]/cellulose fibres or polypropylene [lacuna]/cellulose fibres, having a weight of between 50 and 300 g/m².

7. Use according to Claim 5, **characterized in that**, when the back structure of the complex is formed by a knit, the latter is based on polyester, polyamide, polypropylene or cellulose fibres, the weight of which is advantageously between 30 and 200 g/m².

8. Use according to one of Claims 1 to 7, **characterized in that** the bonding between the surface layer and the textile underlayer of the complex is produced by means of a thermoplastic film directly during extrusion of the said film, this film being based on a polyolefin, such as polyethylene, polypropylene or an ethylene/vinyl acetate copolymer or a blend of these constituents, and having a high melt flow index, its density being between 0.85 and 0.95 and its thickness being between 50 and 200 microns.

## Patentansprüche

1. Verwendung eines Schicht-Verbundstoffs zur Herstellung der Oberflächenauskleidung von insbesondere durch die Technik der Niederdruck-Einspritzung aus thermoplastischem Material geformten Strukturen, mit einer ebenen Struktur (9), die dazu bestimmt ist, die Haut des Endprodukts zu bilden, und die mit einer Unterschicht verbunden ist, die dazu bestimmt ist, an dem eingespritzten Material zu haften, **dadurch gekennzeichnet, daß** die genannte Unterschicht gebildet ist aus einer textilen Lage (10) oder (15) aus Fasern, die widerstandsfähig gegen eine Temperatur oberhalb der Einspritztemperatur sind, wobei die Verbindung mit der abseitigen Fläche der ebenen Struktur mittels einer Folie aus einer thermoplastischen Zusammensetzung erhalten wird, welche mit den zwei Bestandteilen des Verbundstoffes und der genannten textilen Lage, die eine thermische Sperre während der Phase der Einspritzung und eine Schicht der Haftverbindung mit dem eingespritzten Material bildet, kompatibel ist.

2. Verwendung nach Anspruch 1, **dadurch gekennzeichnet, daß** die Oberflächenschicht (9) des Verbundstoffs aus einem extrudierten Folienmaterial aus einem thermoplastischen Material gebildet ist, welches eine Behandlung (Prägung) erhalten hat, die ihm sein endgültiges Aussehen verleiht.

3. Verwendung nach Anspruch 1, **dadurch gekennzeichnet, daß** die Oberflächenschicht (9) des Verbundstoffs von einer Folie aus mit einer Schaumschicht verbundenem thermoplastischen Material gebildet ist.

4. Verwendung nach Anspruch 1, **dadurch gekennzeichnet, daß** die Oberflächenschicht (9) des Verbundstoffs aus einer textilen Struktur (Gewebe, Maschenware) gebildet ist, welche mit einer Schaumschicht verbunden ist oder nicht.

5. Verwendung nach den Ansprüchen 1 bis 4, **dadurch gekennzeichnet, daß** die abseitige textile Struktur (10) oder (15) des Verbundstoffs von einer Vlieslage aus vernadelten Fasern oder aus durch Erspinnen erhaltenen kontinuierlichen Fasern, aus einer Maschenware oder gar einem Gewebe gebildet ist.

6. Verwendung nach Anspruch 5, **dadurch gekennzeichnet, daß** wenn die abseitige Struktur des Verbundstoffs ein Vlies ist, dieses aus Polyesterfasern, Polypropylenfasern oder einer Mischung aus Polyesterfasern und zellulosehaltigen Fasern, aus Polypropylenfasern und zellulosehaltigen Fasern gebildet ist und ein Gewicht zwischen 50 und 300 g/m² aufweist.

7. Verwendung nach Anspruch 5, **dadurch gekennzeichnet, daß** wenn die abseitige Struktur des Verbundstoffs von einer Maschenware gebildet ist, letztere aus Polyesterfasern, Polyamidfasern, Polypropylenfasern oder zellulosehaltigen Fasern besteht, deren Gewicht vorteilhafterweise zwischen 30 und 200 g/m² liegt.

8. Verwendung nach einem der Ansprüche 1 bis 7, **dadurch gekennzeichnet, daß** die Verbindung zwischen der Oberflächenschicht und der textilen Unterschicht des Verbundstoffs mittels einer thermoplastischen Folie direkt beim Extrudieren der genannten Folie ausgeführt ist, wobei die Folie aus Polyolefin wie Polyethylen, Polypropylen oder einem Ethylenvinylacetat-Copolymer oder einer Mischung dieser Bestandteile besteht und einen erhöhten Schmelzpunkt aufweist, wobei ihre Dichte zwischen 0,85 und 0,95 und ihre Dicke zwischen 50 und 200 Mikrometern liegt.
